Europäisches Patentamt

**European Patent Office**

**Office européen des brevets**

(19)

(11) Publication number: **0 044 114**

**A1**

(12) **EUROPEAN PATENT APPLICATION**

(21) Application number: **81200791.2**

(22) Date of filing: **09.07.81**

(51) Int. Cl.³: **D 06 N 7/00**
**D 06 N 3/06**

(30) Priority: **11.07.80 NL 8004010**

(43) Date of publication of application:
**20.01.82 Bulletin 82/3**

(84) Designated Contracting States:
**AT BE CH DE FR GB IT LI LU NL SE**

(71) Applicant: **Forbo B.V.**
**Padlaan 31**
**NL-1561 ZA Krommenie(NL)**

(72) Inventor: **de Kok, Frans, Dr. ir.**
**Lijsterbeslaan 52**
**NL-1829 HC Oudorp(NL)**

(72) Inventor: **Steege, Willem, Drs.**
**Kemphaanstraat**
**NL-1531 V Wormer(NL)**

(72) Inventor: **Johnard, Bengt**
**Hovaas Braeckavaeg 36**
**SE-93380 Hovaas(SE)**

(74) Representative: **Mommaerts, Johan Hendrik,**
**Dipl.-Phys.**
**Octrooibureau Lux Nassau-Odyckstraat 38**
**NL-2596 AJ Den Haag(NL)**

(54) **Flooring material, and method for the manufacture thereof.**

(57) A flooring material comprising a laminated assembly of a substrate made of a dense non-glass fibre felt or similar fibre material (1) with a close surface (2) on which, on the one hand, a foamed upper layer (3) and, on the other hand, a backing layer (6) are provided without an intermediate layer, said backing layer being thinner than the over-all upper layer. During the manufacturing of such an assembly that layer of the upper layer or backing layer which is applied to the substrate last is chosen with such gelation or setting properties either slow or quick and is applied with such a thickness that the gas expelled from the substrate on heating will not cause blisters, craters or entrapped air bubbles therein. The wear-layer (4) is a wear-resistant plastic.

Flooring material, and method for the manufacture thereof.

During recent times flooring materials have been developed, which consist of a laminated assembly of a substrate of fibrous material with, at its upper side, a layer of foamed plastic covered by a wear layer, and sometimes at the lower side a plastic backing layer is provided. The foamed upper layer generally consists of polyvinyl chloride. This foamed layer is elastic, and can be coloured and/or printed in many ways and with arbitrary patterns. Moreover foaming can be controlled in such a manner that thickness variations according to any desired pattern can be obtained, which, in particular, can coincide with the colour patterns.

Until recently asbestos felt was used as the fibrous material. The cover layers of such a material show shrink phenomena, the shrinking occurring during gelating, and, furthermore, as a consequence of stress relaxation phenomena etc., which shrinking leads to upward curling of the material. Therefore such flooring material is preferably glued on the floor. However, because of health hazards, more and more restrictions are being imposed on the processing and application of asbestous materials, so that other substrate materials have come in use.

As a substitute for asbestos felt, glass-fibre fleece is now generally used having, at a very low fibre density, a sufficient strength. Since the openings between the fibres are large, the foam substance will penetrate into the cavities on being applied. During foaming the foaming effect will depend on the layer thickness, so that, in those points where the foam material has penetrated into the glass-fibre layer, the foaming effect will be stronger than in points where no penetration took place, so that the surface structure of the glass fleece becomes visible in an amplified manner at the surface of the foamed layer. Therefore an intermediate layer of non-foaming plastic is generally provided between the fleece and the foam layer so as to flatten the glass fleece surface beforehand. However, this requires an additional step.

An other objection of glass-fibre fleece is that, when handling it, small pieces of glass-fibre may penetrate into the hands, which will lead to a harmful skin irritation. Therefore a plastic backing layer is generally applied on the backside of the glass-fibre fleece for preventing the glass-fibres from getting loose.

Such a material has, however, a considerable face curl, which, again, requires glueing on the floor, and the curl can even be so strong that the glue is pulled apart. This is caused by the fact that the glass-fibre fleece is very rigid in the direction of shrink of the foam layer, and, therefore, does not yield at all, which is still amplified by the intermediate layer provided on the surface penetrating into the glass-fibre fleece and, thus, forming a rigid reinforced plastic layer. The neutral bending plane lies, then, rather low, viz. in the vicinity of the centre of the glass-fibre layer.

This strong curl can be counteracted by making the backing layer, which has, for the above-mentioned reasons, to be provided anyhow, such that its shrink behaviour is comparable to that of the upper layer, taking into account that the weight of the material itself already somewhat counteracts the curl. Because of the aforesaid position of the neutral plane, the thickness of the backing layer should be comparable to the over-all thickness of the upper layer

Such a symmetrically structured laminated assembly appears to be relatively well curl-free. However, care should be taken that the various layers have such stretch properties that, when rolling up, no permanent curvature will arise.

When applying such backing layers it has appeared that air bubbles or even craters may be formed therein, caused by the fact that during applying said layer the air between the glass fibres expands by heating, said air then penetrating into or through the still soft  backing layer. This has an unfavourable influence on the appearance of the backing layer, impairing its salability. This air displacement can be avoided by filling the cavities of the glass-fibre fleece with plastic, or at least to apply, before the application of the backing layer proper, a dense intermediate film for arresting the air. This leads, however, to additional process and material expenses.

Although, in this manner, a flooring material having a good quality and showing a relatively low curl is obtained, the manufacturing costs are considerable, not only because of the price of the glass-fibre fleece and of the material of the various layers, but also because of the number of operations to be performed. An additional drawback, which has an unfavourable influence on the price too, is that each processing step produces a given amount of material rejected because of defects.

It is an object of the invention to provide a laminated flooring material which can be manufactured in a cheaper manner without sacrificing the curl suppression or the appearance of the material, and, in particular, a relatively economical material is obtained thereby which curls so little that glueing is no longer obligatory, so that it can be laid by little or not skilled persons.

The flooring material according to the invention is characterised in that the substrate consists of a fibre felt or other fibre material with a comparable density, on which the upper and backing layers are provided without an intermediate layer, and the backing layer serving to counteract the curl is thinner than the complete upper layer, said backing layer being, in particular, a substantially homogeneous plastic layer with a thickness that is comparable to that of the wear layer.

For, if a fibre felt such as a rock-wool felt, fabric felt, paper-like material or the like, is used, its yieldability in the direction of shrink of the upper layer is relatively high, and is substantially higher than in the case of the above-mentioned glass-fibre fleece, which already reduces the probability of upward curl. Moreover the absence of an intermediate layer is enhancing this yieldability. Surprisingly it has appeared that already relatively thin backing layers can provide an excellent curl compensation, in particular in the case of homogeneous plastic layers, and then a layer thickness comparable to that of the wear layer will already be sufficient. When using foamed backing layers the required thickness at the same curl compensation effect wil be considerable less than in the case of a substrate of glass-fibre fleece. All this will lead to accordingly large material savings, and substantial savings will also be obtained by the reduced number of operation steps.

The use of thinner backing layers allows, when using a specific method according to the invention, to manufacture this backing layer without bubbles or craters, so that its appearance becomes impeccable.

The method of the invention is characterised in that, of the upper foam layer or backing layer, the last applied layer has such gelation or setting properties, and is applied on the substrate with such a thickness that gas dispelled from the substrate by heating will not cause the formation of bubbles or craters, and this because of the fact that the gelation or setting can be controlled in such a manner that this layer either gelates or sets so quickly that the gas cannot escape anymore, or can be delayed so long that all the gas has escaped through the soft layer, the thickness of this layer then being so small and its material qualities being such that the gas is let through without substantial resistance.

As a rule the backing layer will be applied last, as it is the thinner one, so that its gelation or setting can be more easily controlled. The upper layer can, however, be sufficiently thin before foaming so as to be used as the last layer as well. As the backing layer a plastisol can be used, i.e. a substantially homogeneous layer, but also a foamed plastic can be used, and in both cases the layer can consist of polyvinyl chloride, but it is also possible to use a thermosetting plastic, such as a polyurethan.

The asbestos felt known of old may, if desired, be used for the material of the invention since, by applying such a backing layer, the material can be loosely laid and does not require glueing. A drawback of the current asbestos material was, namely, that, when it had to be removed, the glue layer often proved to be stronger than the asbestos felt layer, so that, then, asbestos fibres could be set free, in particular when scratching off remainders of the glued material. With loosely laid flooring this objection does not exist. A drawback of asbestos material is, however, that decomposition gases are produced on heating, so that gas development will be much stronger than in rock-wool and other felts. When using asbestos felt in the method of the invention the probability of air-bubble or crater formation will be higher, so that an accordingly careful operation is required then.

According to the invention a flooring matérial can be obtained which can be manufactured in a considerably cheaper manner than the current material containing glass-fibre fleece, and showing a lower curl than the more expensive material, so that it is excellently suited for being loosely laid, thus lowering the cost for the user still more.

Another requirement to be imposed on the backing layer is that it can compensate for curl caused by shrink phenomena in the upper layer by corresponding shrink phenomena and elastic effects. Since shrinking of the upper layer continues by loss of plasticizer, stress relaxation etc., the shrink behaviour in time of the backing layer should be adapted to this evolution as well as possible, and also the elastic behaviour of the backing layer will contribute to the curl suppression.

The invention will be elucidated below by reference to a drawing, showing a schematic cross-section of an embodiment of the flooring material according to the invention.

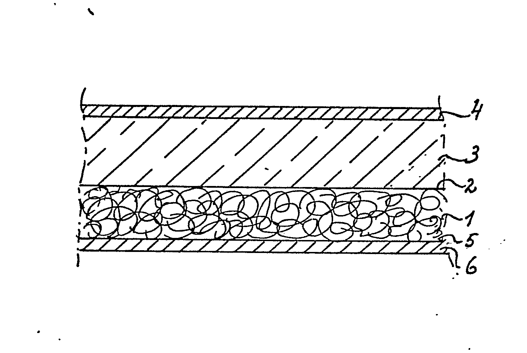

The material shown in the drawing comprises a substrate 1 consisting of a suitable fibrous material, e.g. rock-wool felt or the like, having such a fibre density that its upper surface 2 is substantially smooth, and, in particular, does not have large interstices between the fibres. On the surface 2 a layer 3 of foamed plastic is applied, which is covered by a wear layer 4. On the lower surface 5 of the substrate 1 a backing film 6 is provided.

The substrate 1 consists, as mentioned above, of a dense fibrous material having a much higher density than glass-fibre fleece, but it can, nevertheless, be cheaper than glass-fibre fleece which is filled with plastic or is provided with plastic films. Since the upper surface 2 is much more closed than in the case of glass-fibre fleece, the foam layer 3 can be directly applied on the surface 2 without a substantial penetration of the foam material into the cavities of the substrate. The structure of the substrate 1 will, then, not become visible at the surface. The wear layer 4 consists of a dense wear-resistant plastic. The layers 3 and 4 are of the current kind.

The backing film 6 applied on the lower surface 5 is a thin film of a dense plastic which, for instance, will only be applied on the substrate after the layers 3 and 4 have already been formed. The film 6 is relatively thin, and has, in the case shown, a thickness which is comparable to that of the wear layer 4. Since the felt layer 1 can follow the shrinkage of the layer 3 to some extent, the neutral plane of the curl lies rather high, so that the thin film 6 is situated at a relatively large distance from the neutral plane, and can, therefore, be thin, but nevertheless it has the desired effect. Thin films are also favourable in view of cost.

For manufacturing such a flooring material, one can proceed in different ways.

In a first embodiment of the invention, the layers 3 and 4 are applied first on the substrate 1. The surface 2 is closed by these layers. On applying the backing layer 6, it is to be avoided that, when heating the substrate, the air escaping therefrom will damage the layer 6. In this case the composition of the layer 6 is chosen so that the eventual gelation or setting of this layer is retarded until the expanded air from the layer 1 has escaped through the still soft layer 6. The layer 6 is so thin and has such properties that the resistance in the soft condition is not so high that transfer of the air is substantially impeded.

The layer 6 can consist of a so-called plastisol, forming, after gelation, a substantially homogeneous layer. It is, however, also possible to use a foaming plastic, but then the layer will be thicker than in the case of a homogeneous layer.

In a second embodiment of the invention, the layer 6 is so that gelation or setting proceeds very quickly, in particular before a substantial amount of air has escaped from the substrate 1.

The layer 6 can consist of PVC, and can have such a composition that shrinkage on gelation, and thereafter in time by loss of plasticizer, by stress relaxation etc., is sufficient for compensating for the curl caused by similar shrink phenomena. It is also possible to use a thermosetting plastic, e.g. polyurethan, which shows, during setting and also subsequently, a certain shrinkage as well. The layer 6 is, moreover, elastically loaded on traction, and the tension will oppose the curl.

In both the above-mentioned embodiments the layer 6 can also be applied before the layer 3 is foamed, and foaming said layer 3 and, as the case may be, also the layer 6, will take place then afterwards.

In a third embodiment according to the invention the layer 6 is applied on the surface 5 of the substrate 1 first, and is then gelated or set. The requirements imposed on the layer 6 are the same as in the case of the preceding embodiments, but now the gelation or setting time should no longer be precisely controllable. The layer 3 is applied on the surface 2 of the substrate 1 only thereafter, and its composition is chosen so that either the gelation takes place immediately, so that no air can penetrate from the layer 1 into the layer 3, or the gelation is sufficiently retarded so as to allow the displaced air to escape through the still soft plastic. The layer 3 is, then, still relatively thin, so that the escaping air does not experience an appreciable resistance. Only thereafter the layer 3 is foamed to the desired eventual thickness.

In the following Table, data relating to a current glass-fibre fleece material and of a material according to the invention are mentioned.

| Material with glass-fibre fleece | | Material with rock-wool felt | |
|---|---|---|---|
| wear layer | 0,20 mm | wear layer | 0,20 mm |
| foam layer | 0,75 mm | foam layer | 0,75 mm |
| glass-fibre fleece | 0,60 mm | rock-wool felt | 0,60 mm |
| backing layer | 0,95 mm | backing layer | 0,20 mm |
| total thickness | 2,50 mm | total thickness | 1,75 mm |
| curl* | 4 mm | curl* | 2 mm |

\* Curl is measured as the elevation of a corner of a unit plate of 25 x 25 $mm^2$ after being held for 3 d on 70 °C.

From this Table it appears that with a much thinner backing layer a much better curl suppression can be obtained. In the first-mentioned material the intermediate layers are not mentioned, which are relatively thin, but which, though, require additional operations. If, in the material according to the invention, a foamed backing layer is used, it should be made thicker of course for obtaining the same effect. But also then a backing layer can be used which is considerably thinner than in the case of glass-fibre material, which backing layer, in the foamed condition, can be thinner than the upper layer too. The plastics used are of the current type, so that a further description thereof is not necessary.

- 8 -

_C l a i m s_

1. A flooring material, consisting of a laminated assembly of a substrate of fibre material with, at its upper side, a layer of foamed plastic covered by a wear layer, and, at the lower side of this substrate, a backing layer of plastic is provided, <u>characterised</u> in that the substrate consists of a fibre felt or fibre material with comparable density, on which the upper layer and backing layer are directly applied without an intermediate layer, the backing layer being thinner than the over-all upper layer.

2. The flooring material of claim 1, <u>characterised</u> in that the backing layer is a homogeneous plastic layer having a thickness which is comparable to that of the wear layer.

3. The flooring material of claim 1 or 2, <u>characterised</u> in that the fibre felt is a rock-wool felt, a fabric felt, a paper-like material or an asbestos felt.

4. The flooring material of any one of claims 1..3, <u>characterised</u> in that the backing layer consists of a thermoplastic material, and in particular a plastisol.

5. The flooring material of any one of claims 1..3, <u>characterised</u> in that the backing layer consists of a thermosetting material, and in particular of a polyurethan.

6. A method for manufacturing a flooring material of any one of claims 1..5, <u>characterised</u> in that, of the upper foam layer or the backing layer, that layer which is applied on the substrate last, has such gelation or setting properties, and is applied on the substrate with such a thickness, that the gas expelled from the substrate by heating will not cause formation of blisters, craters or entrapped air bubbles in this layer.

7. The method of claim 6, <u>characterised</u> in that gelation or setting of the layer is controlled in such a manner that this layer gelates or sets so quickly that the gas cannot escape anymore.

8. The method of claim 6, <u>characterised</u> in that the gelation or setting is controlled in such a manner that it is delayed until all the gas has escaped trough the still soft layer, the thickness and material properties of the substrate being so that the gas is let trough without substantial resistance.

9. The method of any one of claims 6..8, <u>characterised</u> in that the backing layer is applied last.

## DOCUMENTS CONSIDERED TO BE RELEVANT

| Category | Citation of document with indication, where appropriate, of relevant passages | Relevant to claim |
|---|---|---|
| | DE - A - 2 730 052 (NAIRN FLOORS) <br> * Especially examples 4,5 * | 1-4, 6-8 |
| | GB - A - 1 206 584 (MARLEY TILE) <br> * Page 1, line 55 - page 2, line 7 * | 1-3, 6-9 |
| | BE - A - 646 237 (MARLEY TILE) <br> * Examples 1,2 and claims * | 1-4, 6-8. |
| A | FR - A - 2 300 669 (MARLEY TILE) <br> * Examples * | 1-4, 6-9 |
| PA | US - A - 4 245 689 (GRARD, LAVIETES, MERGELSBERG) published 20-01-1981) <br> * Figure 1; claims 1-16 * <br> & GB - A - 2 021 173 (GEORGIA BONDED FIBERS) | 1,3 |

---

**CLASSIFICATION OF THE APPLICATION (Int. Cl.⁴)**

D 06 N 7/00
3/06

**TECHNICAL FIELDS SEARCHED (Int. Cl.³)**

D 06 N 3/06
3/08
7/00
A 47 G 27/02
E 04 F 13/16
13/00
B 32 B 5/24
D 21 H 5/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

---

The present search report has been drawn up for all claims

| Place of search | Date of completion of the search | Examiner |
|---|---|---|
| The Hague | 25-09-1981 | COUCKUYT |

EPO Form 1503.1 06.78